**Europäisches Patentamt**

**European Patent Office**

**Office européen des brevets**

(19)

(11) Numéro de publication : **0 494 808 A1**

(12) # DEMANDE DE BREVET EUROPEEN

(21) Numéro de dépôt : **92400017.7**

(22) Date de dépôt : **06.01.92**

(51) Int. Cl.⁵ : **B25J 21/00,** B25J 9/04, B25J 9/10, B25J 19/00, B05B 13/04

(30) Priorité : **07.01.91 FR 9100119**

(43) Date de publication de la demande : **15.07.92 Bulletin 92/29**

(84) Etats contractants désignés : **AT BE CH DE DK ES GB GR IT LI LU NL PT SE**

(71) Demandeur : **ETUDES TECHNIQUES-FRANCHE COMTE-ALSACE ETFA Sàrl 49, rue de Mulhouse F-90000 Belfort (FR)**

(72) Inventeur : **Baills, Jean-Michel 72, rue Foch F-90700 Chatenois Les-Forges (FR)** Inventeur : **Reiter, Alfred 16, rue Vergers F-90400 Sevenans (FR)**

(74) Mandataire : **Armengaud Ainé, Alain Cabinet ARMENGAUD AINE 3 Avenue Bugeaud F-75116 Paris (FR)**

(54) **Robot perfectionné.**

(57)    Robot perfectionné pour le traitement notamment le lavage et/ou la manipulation de pièces, caractérisé en ce qu'il comprend :

— une première tourelle circulaire (14), entraînée en rotation et montée au-dessus de l'espace (12), ou similaire où sont positionnées les pièces devant être manipulées, éventuellement lavées et/ou traitées ;

— une seconde tourelle circulaire (20), entraînée en rotation de façon indépendante du mouvement de rotation de ladite première tourelle (14), montée sur ladite première tourelle, placée à l'intérieur de cette première tourelle et dont le diamètre est égal au moins au rayon de la première tourelle et ;

— un arbre (30) positionné verticalement sur ladite seconde tourelle (20), cet arbre étant entraîné d'un mouvement de translation verticale alternatif et comportant une tête (32), montée à l'une de ses extrémités et qui est munie des moyens de traitement et/ou de manipulation desdites pièces,

— ledit arbre (30) est creux et l'alimentation en liquide de lavage s'effectue au travers de cet arbre, la tête (32) montée à son extrémité étant alors réalisée sous la forme d'une ou plusieurs buses de pulvérisation, éventuellement orientables, cesdites buses sont montées à l'extrémité de la tête par l'intermédiaire d'un bras rotatif.

FIG.1

La présente invention concerne d'une façon générale un robot perfectionné conçu de façon à exécuter des tâches diverses, telles que notamment des opérations de manutention et de transfert de pièces entre différents postes de travail ou de traitement et particulièrement des opérations de nettoyage et de lavage de pièces, sans que l'invention soit pour autant limitée à l'une quelconque des applications mentionnées ci-dessus à titre purement indicatif.

Il existe à l'heure actuelle différents types de robots comme ceux décrits dans l'article "A new concept of the SCARA Robot" extrait de la publication "Robotics and Computer Integrated Manufacturing - Volume 7 - N° 3/4, 1990, qui permettent de réaliser notamment les fonctions mentionnées ci-dessus. Cependant, jusqu'à présent il n'a pas été possible d'utiliser, de façon fiable et efficace, ces robots connus pour effectuer des manipulations et/ou des traitements de pièces très précis. C'est ainsi en particulier que, lorsqu'on veut effectuer des opérations de nettoyage et/ou de lavage de pièces présentant des contours et des configurations compliqués, il n'existe pas à l'heure actuelle de dispositif permettant de résoudre, de façon satisfaisante, les problèmes posés par de tels traitements. On sait que de telles opérations sont généralement effectuées dans des tunnels en mettant en oeuvre des installations fixes projetant et pulvérisant un liquide de lavage sur les pièces placées dans le tunnel. Or, une telle solution ne permet pas d'effectuer un lavage convenable de pièces à structure compliquée en raison de l'impossibilité de diriger les jets à l'intérieur de la structure des pièces traitées et en outre, cette solution manque de souplesse compte tenu du fait qu'il est nécessaire de modifier le système de projection du liquide de lavage en fonction notamment des différents types de pièces devant être traités.

La présente invention s'est donc fixée pour objectif d'apporter un robot perfectionné qui présente une structure adaptée au passage et à la distribution du fluide de lavage qui permet d'exécuter des tâches diverses et notamment d'effectuer des opérations de lavage de pièces présentant des formes complexes, ces opérations pouvant être aisément programmées en tenant compte des formes, configurations et dimensions desdites pièces.

En conséquence, cette invention a pour objet un robot perfectionné caractérisé en ce qu'il comprend :
– une première tourelle circulaire, entraînée en rotation et montée au-dessus de l'espace, ou similaire où sont positionnées les pièces devant être manipulées et/ou traitées ;
– une seconde tourelle circulaire, entraînée en rotation de façon indépendante du mouvement de rotation de ladite première tourelle, montée sur la première tourelle et placée à l'intérieur de cette première tourelle et dont le diamètre est au moins égal au rayon de ladite première tourelle ;

– un arbre positionné verticalement sur ladite seconde tourelle, qui est entraîné d'un mouvement de translation verticale alternatif et qui comporte une tête, montée à l'une de ses extrémités et qui est munie des moyens de traitement et/ou de manipulation desdites pièces ;
– l'arbre est creux et l'alimentation liquide s'effectue au travers de cet arbre, la tête montée à son extrémité étant alors réalisée sous la forme d'une ou plusieurs buses de pulvérisation, éventuellement orientables, ces dites buses sont montées à l'extrémité de ladite tête par l'intermédiaire d'un bras rotatif.

Selon un mode de réalisation préféré du robot selon l'invention, chacune des tourelles circulaires est entraînée par un moteur électrique asservi à une commande numérique, ce moteur électrique entraînant un système de pignons engrenant sur une couronne dentée prévue le long de la périphérie de chacune desdites tourelles.

Selon l'invention, ledit arbre est animé d'un mouvement de translation verticale alternatif par l'intermédiaire d'une vis entraînée par un moteur électrique, asservi à une commande numérique, cette vis étant montée sur un bâti solidaire de la seconde couronne circulaire et étant en prise sur un écrou solidaire dudit arbre. On peut, sans sortir du cadre de la présente invention, envisager d'autres moyens pour assurer le mouvement de translation verticale alternatif dudit arbre, par exemple un entraînement obtenu par l'intermédiaire d'un système pignon-crémaillère.

D'autres caractéristiques et avantages de la présente invention ressortiront de la description faite ci-après en référence aux dessins annexés qui en illustrent un exemple de réalisation et d'application dépourvu de tout caractère limitatif. Sur les dessins :
– la figure 1 est une vue schématique en élévation latérale et coupe axiale verticale partielle représentant un exemple de réalisation du robot objet de la présente invention dans son application au lavage et/ou au nettoyage de pièces et ;
– la figure 2 est une vue en plan de la figure 1.

Dans la description faite ci-après, on se réfère à une application de l'invention qui concerne le lavage et/ou le nettoyage de pièces et notamment de pièces présentant des contours et structures de formes compliquées. Cependant, il demeure bien entendu qu'il ne s'agit là que d'un exemple d'application non limitatif, le robot objet de l'invention et décrit ci-après pouvant être utilisé à d'autres fins, comme on le mentionnera ci-après (notamment manipulation, séchage de pièces etc...) en effectuant un simple changement de la tête prévue à l'extrémité de l'arbre du robot

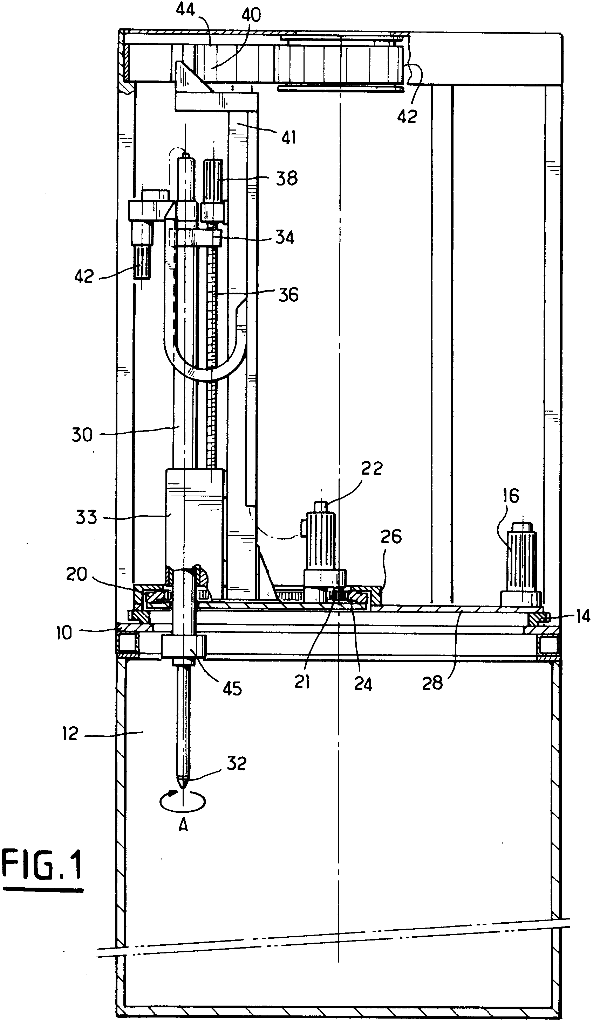

En se référant aux dessins, on y a représenté en partie supérieure de la figure 1 le robot objet de l'invention qui est monté sur un bâti 10 positionné au-dessus d'une enceinte 12 dans laquelle sont placées les pièces devant être traitées (ces pièces n'ont pas été représentées sur le dessin). Comme on l'a précisé ci-dessus, dans cet exemple d'application non limitatif, l'enceinte 12 est une enceinte de lavage et/ou de nettoyage.

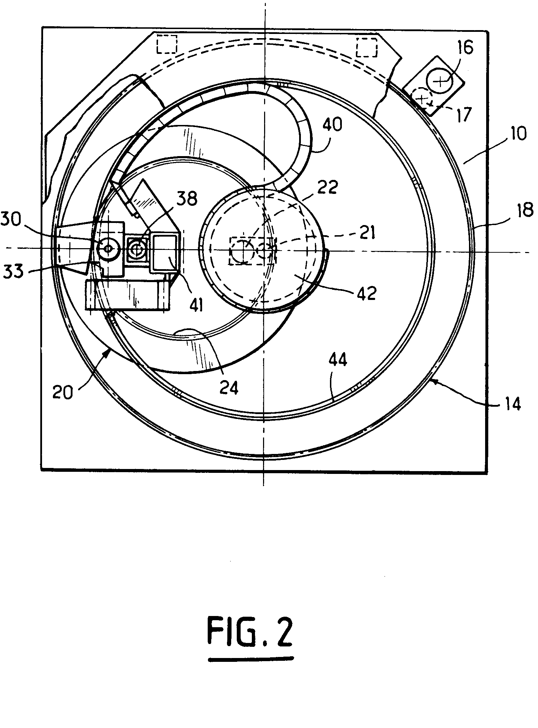

Le robot comporte une première tourelle circulaire désignée dans son ensemble par la référence 14, qui, dans cet exemple de réalisation est entraînée en rotation par l'intermédiaire d'un moteur électrique 16 entraînant un système de pignons représenté schématiquement en 17 sur la figure 2 et qui est en prise avec une couronne dentée circulaire 18 prévue à la périphérie de la tourelle 14. Le moteur 16 peut être asservi par exemple à l'aide d'un système à commande numérique.

A l'intérieur de la première tourelle 14, le robot comporte une seconde tourelle circulaire désignée dans son ensemble par la référence 20, dont le diamètre est au moins égal au rayon de la première tourelle circulaire 14, qui est montée sur cette première tourelle 14 et qui est disposée à l'intérieur de cette tourelle 14 comme on peut le voir clairement sur la figure 2. Dans cet exemple de réalisation, cette seconde tourelle circulaire 20 est entraînée en rotation, indépendamment du mouvement de rotation de la première tourelle 14 par l'intermdiaire d'un moteur électrique 22 entraînant un système de pignons représenté schématiquement en 21 sur la figure 2 et qui est en prise avec une couronne dentée circulaire 24 prévue à la périphérie de la tourelle 20. Le moteur 22 peut être asservi par exemple à l'aide d'un système à commande numérique. Le montage de la seconde tourelle 20 sur la première tourelle circulaire 14 est réalisé par exemple à l'aide d'une platine 26 montée directement sur la partie circulaire 28 de la première tourelle circulaire 14. De cette façon, lorsque la première tourelle 14 est entraînée en rotation, elle entraîne avec elle la seconde tourelle 20 et cette dernière peut tourner autour de son centre de façon indépendante du mouvement de rotation communiqué à la première tourelle 14.

Sur la seconde tourelle circulaire 20 est montée un arbre 30 dont l'extrémité, positionnée dans l'enceinte 12 est munie d'une tête 32 portant par exemple des moyens de manipulation de pièces ou, dans cet exemple particulier d'application des moyens de lavage et/ou de nettoyage des pièces. Cet arbre 30 est maintenu dans un support 33 fixé sur la platine 26 de la seconde tourelle circulaire 20 et il est entraîné selon un mouvement de translation verticale alternatif qui, dans cet exemple non limitatif, est réalisé à l'aide d'un système écrou-vis sans fin. A cet effet, l'arbre 30 comporte un écrou 34 en prise sur une vis sans fin 36 entraînée par un moteur 38. Ce moteur 38 peut être asservi à l'aide d'un système à commande numérique. L'ensemble moteur 38 et vis sans fin 36 est maintenu en position à l'aide d'un support vertical 41 en forme de potence dont l'extrémité inférieure est solidaire de la seconde tourelle 20.

L'arbre 32 peut être également animé d'un mouvement de rotation autour de son axe vertical à l'aide d'un moteur 42, selon la flèche A indiquée sur la figure 1.

Dans cet exemple d'application du robot selon l'invention au lavage et/ou au nettoyage de pièces, la tête 32 est réalisée sous la forme d'une ou plusieurs buses de pulvérisation éventuellement orientables et l'alimentation en liquide de lavage de la tête 32 s'effectue par l'intermédiaire de l'arbre 30 qui est creux. Ces buses de pulvérisation peuvent être montées à l'extrémité de la tête 32 par l'intermédiaire d'un bras rotatif (cette possibilité non illustrée par le dessin peut être facilement mise en oeuvre par l'homme de l'art).

On comprend que grâce à l'invention, la tête 32 peut balayer tout le volume de l'enceinte 12 : en effet, cette tête 32 est déplacée selon la combinaison de mouvements ci-après :

– mouvement alternatif montée/descente de l'arbre 30 à l'extrémité de laquelle elle est montée, ce mouvement pouvant être en outre associé à un mouvement de rotation de l'arbre 30 par rapport à son axe vertical ;

– mouvement de rotation de la seconde tourelle circulaire 20 et ;

– mouvement de rotation de la première tourelle circulaire 14, ce mouvement entraînant également la seconde tourelle circulaire 20 et l'arbre 30, ces deux éléments du robot étant montés sur la première tourelle 14, ainsi qu'on l'a décrit ci-dessus.

Ainsi, la tête 32 peut être déplacée dans l'enceinte 12 en tout emplacement du volume de cette dernière, ce qui, dans cet exemple particulier d'application au nettoyage de pièces, par exemple par lavage, permet de traiter n'importe quelle partie d'une pièce de formes complexes. Grâce à la combinaison de mouvements décrite ci-dessus, la tête peut pénétrer à l'intérieur d'une pièce afin d'y effectuer un lavage interne. Par ailleurs, il n'est pas nécessaire de modifier l'installation pour traiter des pièces de formes différentes. En effet, dans ce cas, il suffit soit de modifier le programme d'asservissement des différents mouvements de la tête de lavage soit de changer la tête 32.

L'alimentation en énergie électrique des différents moteurs permettant de réaliser les mouvements de la tête 32 s'effectue de façon classique à l'aide de câbles blindés souples. Ainsi, comme on le voit sur les figures 1 et 2, le câble d'alimentation principal 40 peut s'enrouler sur deux couronnes circulaires concentriques 42 et 44 prévues à la partie supérieure du robot de façon à pouvoir suivre les différents mouvements de ce dernier.

Le robot selon l'invention décrit ci-dessus dans son application au lavage de pièces supprime les problèmes liés à l'obtention de l'étanchéité entre le robot et l'enceinte 12 recevant les pièces à laver. En effet, l'étanchéité est très facile à réaliser étant donné que toute la partie cinématique du robot est directement implantée sur la partie supérieure de l'enceinte 12, en dehors de cette enceinte 12, ainsi qu'on le voit sur la figure 1. Il suffit simplement de prévoir un joint tournant 45 sur le tube 30.

Ainsi qu'on l'a mentionné ci-dessus, le robot objet de la présente invention peut recevoir de multiples applications.

Il permet non seulement d'effectuer un nettoyage de pièces par pulvérisation d'une solution de lavage lorsque sa tête 32 comporte une ou plusieurs buses de pulvérisation mais également d'effectuer des opérations d'ébavurage, en utilisant des jets à haute pression permettant d'obtenir un détachement des copeaux qui subsistent sur les pièces après leur usinage. Il permet également de réaliser des opérations de séchage en projetant un fluide de séchage au travers de l'arbre 30 et de la tête 32, cette tête ainsi qu'on l'a vu ci-dessus pouvant pénétrer dans toute la structure de la pièce même si cette dernière est complexe. Il est également possible de mettre en oeuvre le robot selon la présente invention pour réaliser une multiplication des postes de travail en ligne de manière à obtenir des traitements en chaîne continue, par exemple : lavage, ébavurage, séchage etc...

Il demeure bien entendu que la présente invention n'est pas limitée aux exemples de réalisation et/ou d'applications mentionnés ici mais qu'elle en englobe toutes les variantes.

## Revendications

**1 -** Robot perfectionné pour le traitement notamment le lavage et/ou la manipulation de pièces, caractérisé en ce qu'il comprend :

– une première tourelle circulaire (14), entraînée en rotation et montée au-dessus de l'espace (12), ou similaire où sont positionnées les pièces devant être manipulées, éventuellement lavées et/ou traitées ;

– une seconde tourelle circulaire (20), entraînée en rotation de façon indépendante du mouvement de rotation de ladite première tourelle (14), montée sur ladite première tourelle, placée à l'intérieur de cette première tourelle et dont le diamètre est égal au moins au rayon de la première tourelle et ;

– un arbre (30) positionné verticalement sur ladite seconde tourelle (20), cet arbre étant entraîné d'un mouvement de translation verticale alternatif et comportant une tête (32), montée à l'une de ses extrémités et qui est munie des moyens de traitement et/ou de manipulation desdites pièces,

– ledit arbre (30) est creux et l'alimentation en liquide de lavage s'effectue au travers de cet arbre, la tête (32) montée à son extrémité étant alors réalisée sous la forme d'une ou plusieurs buses de pulvérisation, éventuellement orientables, cesdites buses sont montées à l'extrémité de la tête par l'intermédiaire d'un bras rotatif.

**2 -** Robot perfectionné selon la revendication 1, caractérisé en ce que chacune des tourelles circulaires (14 ; 20) est entraînée par un moteur électrique (16 ; 22) pouvant être asservi à une commande numérique, ce moteur électrique entraînant un système de pignon (17 ; 21) engrenant sur une couronne dentée (18 ; 24) prévue respectivement le long de la périphérie de chacune desdites tourelles.

**3 -** Robot perfectionné selon l'une des revendications précédentes, caractérisé en ce que ledit arbre (30) est animé d'un mouvement de translation verticale alternatif par l'intermédiaire d'une vis sans fin (36) entraînée par un moteur électrique (38), pouvant être asservi à une commande numérique, cette vis sans fin étant montée sur un bâti (33) solidaire de la seconde couronne circulaire (20) et étant en prise sur un écrou (34) solidaire dudit arbre.

**4 -** Robot perfectionné selon l'une quelconque des revendications précédentes, caractérisé en ce que ledit arbre (30) est animé d'un mouvement de rotation autour de son axe vertical par l'intermédiaire d'un moteur électrique (42).

**FIG.1**

FIG.2

Office européen
des brevets

**RAPPORT DE RECHERCHE EUROPEENNE**

Numero de la demande

EP    92 40 0017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | ROBOTICS AND COMPUTER INTEGRATED MANUFACTURING. vol. 7, no. 3/4, 1990, HEADINGTON HILL HALL, OXFORD G pages 337 - 343; MILUTINOVIC: 'a new concept of a scara robot' * page 339, colonne 2, ligne 22 - page 341, colonne 2, ligne 3 * --- | 1-4 | B25J21/00 B25J9/04 B25J9/10 B25J19/00 B05B13/04 |
| Y | US-A-4 228 958 (PERRY) * colonne 2, ligne 2 - ligne 27 * --- | 1-4 | |
| A | FR-A-2 526 339 (STIC-HAFROY) * revendication 1 * --- | 1 | |
| A | FR-A-2 085 185 (COMMISSARIAT A L'ENERGIE ATOMIQUE) * page 1, ligne 35 - page 2, ligne 9 * --- | 1 | |
| A | EP-A-0 154 825 (SANKYO) * abrégé * --- | 3,4 | |
| A | US-A-4 661 040 (CIGNA) --- | | DOMAINES TECHNIQUES RECHERCHES (Int. Cl.5) |
| A | GB-A-2 129 086 (THE MARCONI COMPANY) --- | | B25J |
| A | EP-A-0 203 830 (UNIMATION) ----- | | B05B B08B |

Le présent rapport a été établi pour toutes les revendications

| Lieu de la recherche | Date d'achèvement de la recherche | Examinateur |
|---|---|---|
| LA HAYE | 01 AVRIL 1992 | LAMMINEUR P.C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)